# EUROPEAN PATENT SPECIFICATION

(11) **EP 1 417 660 B1**
(45) Date of publication and mention of the grant of the patent: **14.12.2005**
(21) Application number: 02750639.3
(22) Date of filing: 18.07.2002
(51) Int. Cl.: G08B 13/186, G02B 6/44, H04B 10/12, H01B 7/24, H01B 7/29, A01K 3/00

(54) **OPTIC FIBRE SUPPORT DEVICE**
HALTEEINRICHTUNG FÜR OPTISCHE FASERN
DISPOSITIF DE SUPPORT POUR FIBRE OPTIQUE

(30) Priority: 16.08.2001 AU PR707901; 31.10.2001 AU PR860301
(43) Date of publication of application: 12.05.2004
(73) Proprietor: Future Fibre Technologies Pty Ltd, Mulgrave, Victoria 3170 (AU)
(72) Inventor: JAFFREY, Donald, Mount Dandenong, Victoria 3767 (AU)
(74) Representative: Garratt, Peter Douglas
(86) International application number: PCT/AU2002/000962
(87) International publication number: WO 2003/017219

(56) References cited:
- WO-A1-98/24073
- WO-A2-90/07138
- DE-A- 4 400 619
- US-A- 5 578 990
- PATENT ABSTRACTS OF JAPAN vol. 2000, no. 07, 29 September 2000 (2000-09-29) & JP 2000 121844 A (FURUKAWA ELECTRIC CO LTD:THE), 28 April 2000 (2000-04-28)
- PATENT ABSTRACTS OF JAPAN & JP 2000 298010 A (CHORYO SEIGYO SYSTEM KK) 24 October 2000

## Description

### Field of the Invention

This invention relates to an optic fibre support device for use in perimeter barriers for supporting an optic fibre which is used to generate an alarm if an attempt is made to breach the barrier.

### Background Art

Perimeters such as fences are known which use optic fibres to generate an alarm if an attempt is made to breach the fence, either by separating adjacent wires so a person can pass through the adjacent wires, or by cutting the wires.

US Patent 5,578,990 discloses a security device which increases the height of fences. These devices have a mount which sits on the top of a fence post and which has an arm 10 which extends outwardly from the mount and supports barrier wires 45. Upon attempt to climb over the barrier wires the arms 10 are moved to generate an alarm.

In another conventional arrangement an optical fibre runs parallel with each of the wires which are suspended between the vertical posts. If the wires are spread apart, the optical fibres are moved with the wires and the movement of the optical fibre causes a change in parameter of light transmitted through the fibre which is detected by a detector and which causes an alarm to be generated. The major disadvantage of this technique is that a considerable amount of optical fibre is required and due to the high expense of such fibre, the cost of a security perimeter barrier of this type is very high particular if the barrier is of significant length.

To overcome the cost problems associated with running an optical fibre along each of the fence wires, a system has been developed where the wires which make up the fence are periodically joined by a spring and in the vicinity of the spring, an optical fibre is looped across the spring. The fibre can merely be looped from one of the horizontal wires to the next without having to extend along all of the horizontal wires. If an attempt is made to breach the fence by separating the wires, the movement of the wires will further stretch the spring thereby pulling on the loop of optical fibre to change its shape and therefore change the parameter of a light signal propagating along the fibre. If the wire is cut, the spring tension is released, causing a change in shape of the fibre which is looped in the vicinity of the spring.

However, this system, whilst considerably reducing the amount of optical fibre which is required, has a problem that the looping of the fibre is not controlled and the amount of movement of the wire, depending on where the intrusion takes place, can move the optical fibre only a small amount in the vicinity of the loop. This, together with the uncontrolled movement of the fibre in the loop at the vicinity of the spring, makes detection of an actual intrusion more difficult.

Furthermore, the nature of the motion which produces the change in parameter in the optical fibre in the above systems is mainly a vibration of the wire, rather than a translatory movement. While some translatory movement may also be involved, the majority of the movement of the fibre is in the form of a vibration which extends along the wire when the wire is moved.

### Summary of the Invention

The object of the present invention is to provide a device which overcomes this problem.

The invention, in a first aspect, may be said to reside in a device for supporting an optical fibre in a perimeter barrier, including:
a first support member for connection to a portion of the perimeter barrier;
a second support member for connection to another portion of the perimeter barrier, characterised by;
   a first fibre support coupled to the first member;
   a second fibre support coupled to the second member;
   coupling means for coupling the first fibre support and the second fibre support for relative movement with respect to one another; and
   biasing means for biasing the first and second fibre supports into an intermediate orientation between a maximum biased orientation provided by a maximum bias of the biasing means and a zero bias orientation if no bias is provided by the biasing means.

Thus, according to the invention, the device can be coupled into a fence by connecting the first and second members to parts of the fence, such as in a horizontal wire of the fence, so that when the wire is tensioned, the biasing means biases the fibre supports into the intermediate position. An optical fibre can be supported on the fibre supports and run along the supports so as to place the optical fibre into a predetermined orientation. If an attempt is made to breach the barrier by pushing apart adjacent wires of the fence, the separation of the wires will pull on one of the support members to stretch the spring and therefore increase the amount of bias supplied to the fibre supports to cause the supports to move relative to one another to change the orientation of the supports and therefore change the orientation and shape of the fibre by a translatory movement of the fibre, more so than a vibration. This changes the parameter of the optical signal propagating through the fibre so that the alarm can be generated. If the fence is attempted to be breached by cutting the wire, the cut wire will result in the biasing means not applying any bias at all to the two fibre supports, thereby causing the spring to remove the bias applied to the supports so the supports move to an unbiased position to again cause a change in the shape of the optical fibre supported by the supports so that the signal can be generated. The invention has the distinct advantage that the fibre supports can act as an amplifier to amplify the amount of movement of the portion of the fence which may be moved on an attempted intrusion so that a change in shape of the fibre occurs which produces a change in the parameter of the propagating light which is easily detectable. Furthermore, because the change in shape is determined by movement of the supports and the supports can move from the intermediate position towards the maximum bias position or minimum bias position, the amount of movement and the nature of the movement is therefore controlled thereby providing more certainty in the change in parameter of the signal which will occur when an intrusion actually takes place.

Preferably the fibre supports comprise support arms.

Preferably the coupling means is a pivot means.

In the preferred embodiment of the invention the biasing means comprises a spring which has one end connected to the first member and the other end connected to the second member.

Preferably the arms are curved arms, each arm having a first end pivotally connected to a respective one of the first and second support members, and a second end pivotally coupled together by the pivot means.

Preferably the device includes attachment means for attaching the optical fibre to the device so that the optical fibre is supported on the device and extends along the arms of the device.

Preferably the first and second portions include connection portions for connection to the portions of the perimeter barrier.

The connection portions may comprise holes to which the portions of the perimeter barrier are connected or tabs which are folded over to engage the portions of the perimeter to join the portions of the perimeter barrier to the first and second members.

Preferably the attachment means comprise support lugs on the device.

Preferably the attachment means further includes ties for securing the fibres so the fibres extend along the arms.

Preferably the arms have a transverse cross section which is at least part curved in shape so that the fibre can locate in the curved profile of the arms.

The arms may include a reinforcing rib which extends along at least part of the length of the arms to strengthen the arms.

In another embodiment, the device has third and fourth fibre supports which form a straight-sided W configuration with three pivot connections formed between adjacent arms of the W configuration.

In the most preferred embodiment of the invention, the first fibre support and second fibre support are coupled for relative movement on pivot means so that should the perimeter barrier expand or contract due to changes in temperature, the first and second fibre supports move in a substantially fixed manner with respect to one another so that there is substantially no change in the configuration of an optical fibre to be supported on the first and second fibre supports.

Preferably the first and second fibre supports comprise arms which are arranged with respect to one another in a predetermined orientation, each arm having a coupling means which includes pivot means so that upon an attempt to breach the perimeter barrier, movement of the perimeter barrier will cause relative movement of the first and second fibre supports with respect to one another, but on a change of temperature, expansion or contraction of the perimeter barrier causes fixed but no relative movement of the first fibre support with respect to the second fibre support so that an alarm signal is not generated due to movement of the perimeter barrier caused by expansion or contraction of the perimeter barrier due to temperature change.

Preferably the coupling means include coupling flanges and the pivot means comprises a single pivot pin passing through both of the coupling flanges.

Whilst in a preferred embodiment, a single pivot means is used to couple both flanges, the coupling means may include separate pivot pins for separately coupling the fibre supports for relative movement with respect to one another.

There is also disclosed a device for supporting an optical fibre in a perimeter barrier, including:
a first support member for connection to a portion of the perimeter barrier;
a second support member for connection to another part of the perimeter barrier;
a first fibre support coupled to the first member;
a second fibre support coupled to the second member;
pivotal mounting means for mounting the first and second fibre supports for pivotal movement; and
wherein upon an attempt to breach the perimeter barrier, movement of a portion of the perimeter barrier causes relative movement between the first and second fibre supports so as to change the orientation of an optical fibre supported on the first and second fibre supports to thereby enable an alarm condition to be generated, and upon movement of the perimeter barrier by way of contraction or expansion due to temperature fluctuation, causes a fixed movement of the first and second fibre supports but no relative movement between the first and second fibre supports so as to not change the configuration of an optical fibre supported on the first and second fibre supports so an alarm condition is not generated.

Preferably the first and second fibre supports comprise arms, and the arms are biased into a predetermined orientation by biasing means.

Preferably the pivotal mounting means is a single pivot pin on which the first and second fibre support members are mounted.

In this embodiment, the support device is locatable within a support post and the biasing means include a first spring having a first arm abutting a wall of the support post and a second arm abutting the first fibre support, and a second spring having a first spring arm abutting an opposite wall of the post and a second spring arm abutting the second fibre support.

Preferably the first and second fibre supports include attachment means for securing the fibre to the supports.

Preferably the first and second support members each carry a capstan wheel for engaging the portion of the perimeter barrier, the capstan wheel having a handle member for enabling rotation of the capstan wheel so that the perimeter barrier member can be tensioned by winding onto the capstan wheel.

Preferably the first and second support members each comprise a pair of plates between which the capstan wheel is journaled for rotation.

Preferably the plates include locking means for locking the capstan wheel in a rotated position to maintain the tension on the perimeter barrier.

Preferably the locking means comprises a pin located through an opening in the support members which engages the handle member to prevent rotation of the capstan in the reverse direction due to tension of the perimeter barrier on the capstan wheel.

### Brief Description of the Drawings

Preferred embodiments of the invention will be described, by way of example, with reference to the accompanying drawings in which:
Figure 1 is a view of a device embodying the invention;
Figure 2 is a view of a device according to a second embodiment;
Figure 3 is a cross-sectional view along the line III-III of Figure 2;
Figure 4 is a view of the device of Figure 1 in maximum biased condition;
Figure 5 is a view of the device of Figure 1 in a no bias condition;
Figure 6 shows, schematically, a plurality of the devices installed in a perimeter barrier and supporting an optic fibre;
Figure 7 shows a third embodiment of the invention;
Figure 8 shows a fourth embodiment of the invention;
Figure 9 shows a perimeter barrier including support devices according to the preferred embodiment of the invention;
Figure 10 is a view of a support device according to the preferred embodiment of the invention;
Figure 10A is a plan view of part of the embodiment of Figure 10 along the line X-X of Figure 10;
Figure 11 shows the device of Figure 10 to illustrate operation of the device and show the device in a second operating position;
Figure 12 shows the device in a position caused by temperature fluctuation; and
Figure 13 is a view of a still further embodiment of the invention.

### Description of the Preferred Embodiments

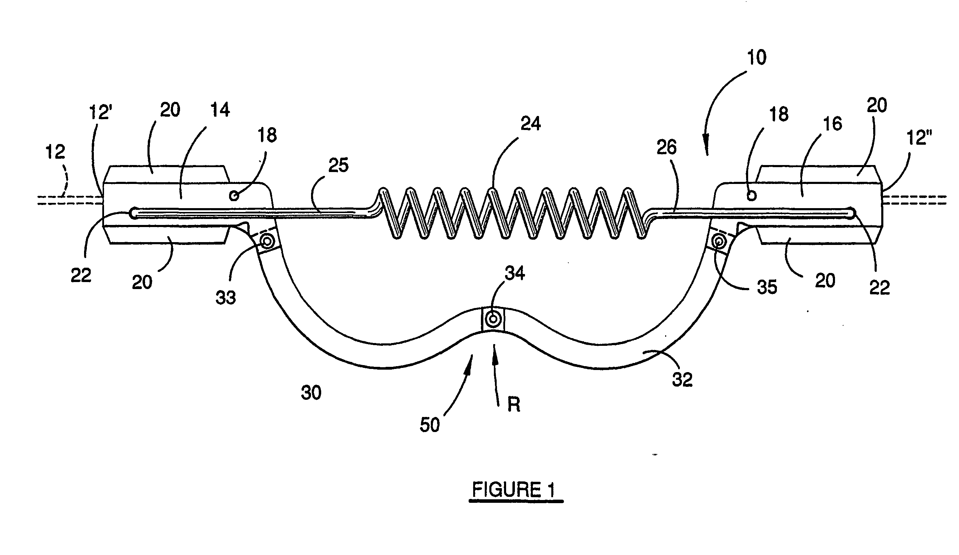

With reference to Figure 1, a device 10 for supporting an optical fibre in a perimeter barrier such as a fence formed from vertical posts and horizontal wires is shown. The wires are schematically shown by reference 12 in Figure 1 and may comprise barbed or non-barbed, single or multi-stranded wire.

The device 10 has a first support member 14 and a second support member 16. The first and second support members 14 and 16 are intended to be connected to the wire 12 by cutting the wire 12 and coupling one end 12' of the wire 12 to the support member 14 and the other end 12'' of the wire 12 to the support member 16. If the fence has not already been erected, two lengths of wire can simply be connected to each of the support members 14 and 16 so that when the wires are supported to vertical posts, the device 10 is suspended in the manner shown in Figure 1.

The support members 14 and 16 are generally identical and include connection means for connecting the wire ends 12' and 12" to the portions 14 and 16. The connections may include holes 18 in which the ends 12' and 12" can locate. Alternatively, the portions 14 can include tabs 20 which can be folded over and crimped to the ends 12' so as to secure the ends 12' and 12" to the support members 14 and 16. The support members 14 and 16 have a second hole 22 so that a spring 24 can be suspended between the portions 14 and 16. The spring 24 has wire ends 25 and 26 which can couple in the holes 22. Alternatively, the ends 25 and 26 could also be connected to the support members 14 and 16 by crimping the tabs 20 in the same manner as the barbed wire ends 12' and 12'' are connected to the support members 14 and 16.

The support members 14 and 16 may also include lugs 41 for guiding the optical fibre from the support portions 39 and 40 to the arms 30 and 32.

A first curved arm 30 and a second curved arm 32 are respectively connected to the first support member 14 and second support member 16. The arms 30 and 32 are connected to support members 14 and 16 by pivot connections 33 and 35 which may simply comprise pivot pins, rivets or the like. The opposite ends of the arms 30 and 32 are pivotally connected together by a pivot connection 34 which, again, may comprise a pivot pin, rivet or the like.

In the orientation shown in Figure 1, the curved arms 30 and 32 form a generally shallow curved W configuration.

The device of Figure 1 is installed in the wires 12 so that the spring 24 is partly tensioned but not fully tensioned so that the arms 30 and 32 are pulled into the orientation shown in Figure 1 which forms an intermediate orientation between an orientation the arms will take up if the spring 24 is fully stretched or the spring 24 is effectively released and applies no bias at all to the arms 30 and 32.

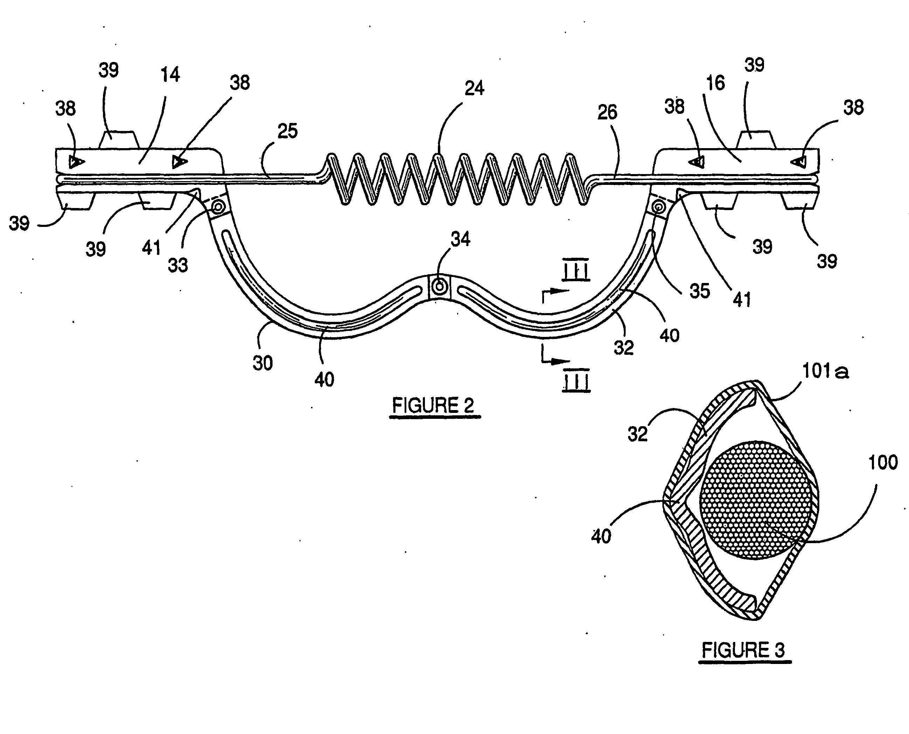

Figure 2 is a view of a second embodiment of the invention in which like reference numerals indicate like parts to those previous described. In this embodiment chevron-like projections 38 are punched out of the support members 14 and 16 so as to provide apertures and tabs which can be used to connect the ends 14 and 16 to the ends 12' and 12" of the wire 12 described with reference to Figure 1. Similarly, a plurality of individual discreet tabs 39 can also be provided for securing the ends 12' of the wire 12 and also the arms 25 and 26 of the spring 24 to the support members 14 and 16.

In this embodiment, the arms 30 and 32 can be provided with a rib 40 to strengthen the arms and the arms may also have a curved cross-section as shown in Figure 3 in which optical fibre 100 can be accommodated. The optical fibre 100 can be connected to the arms 30 and 32 so as to run along the arms 30 and 32 by a metal or plastic tie 101a.

The support members 14 and 16 and the arms 30 and 32 can be pressed from metal and the tabs 20, 39 and 41 formed in the pressing and then folded into the orientation and then, in the case of the tabs 20 and 39, folded and crimped to support the arms 25, 26 of the spring 24 or the ends 12' and 12" of the wire 12. The tabs 41 can be folded into an orientation in which they will act as a support for the optical fibre 100.

The optical fibre 100 may be a single fibre, but more preferably may be in the form of a cable containing plural fibres.

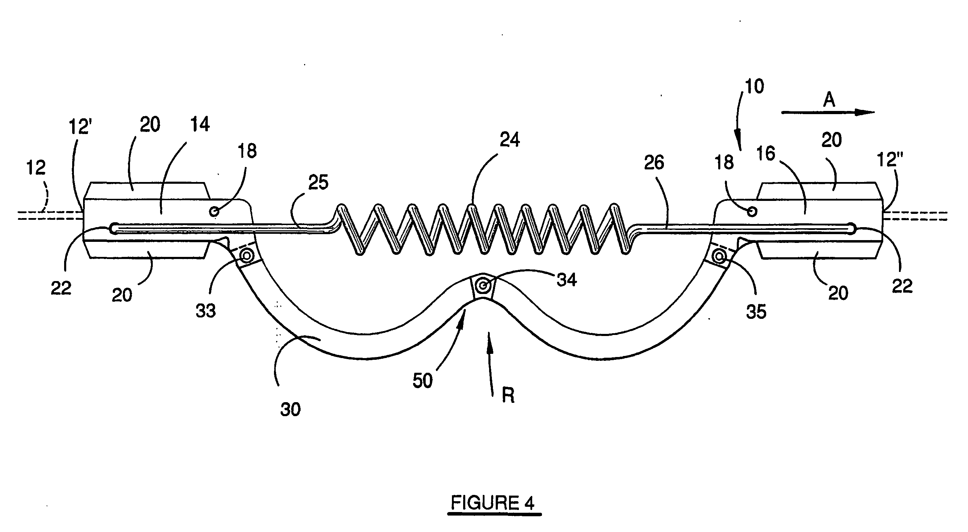

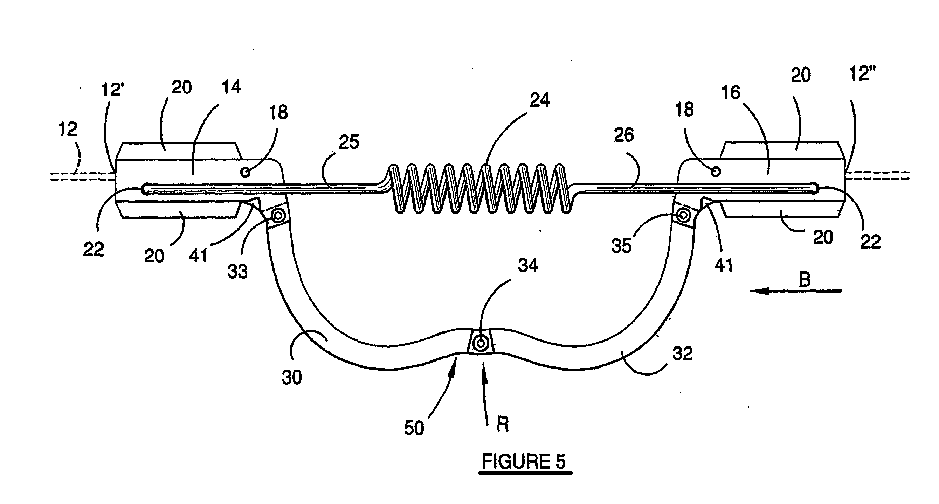

With reference to Figures 4 and 5, if an attempt is made to breach the perimeter barrier by pushing apart wire 12 and an adjacent wire which is arranged above or below the wire 12, the pushing apart of the wires 12 will result in a force being supplied in the direction of, for example, arrow A in Figure 4 which will tend to pull, for example, the support 16 in the direction of arrow A. The pulling of the support in the direction of arrow A will stretch the spring 24 and increase the amount of bias which is applied to the arms 30 and 32 so that the arms 30 and 32 are pulled into the orientation shown in Figure 4. In this orientation, it will be seen that the radius of the curved portion 50 of the arms 30 and 32 adjacent the pivot 34 is decreased from the radius shown in Figure 1. The radius shown in Figure 1 may preferably be set at a radius of, for example, 40mm and the radius in Figure 4, at maximum stretch of the spring 24, being reduced to about 15mm. The change in radius and therefore the change in the shape of the fibre at the position of the curved portion 50 is therefore controlled and consistently reproduced on an attempt to breach the barrier by a person pushing apart adjacent wires 12 and trying pass between the adjacent wires 12.

If an attempted breach is made by cutting one of the wires 12, the cut wire 12 will release the tension applied to the spring 24 so the spring 24 returns to a completely unstretched position thereby pulling the support member 16 towards the support member 14 in the direction of arrow B in Figure 5 until the spring 24 is completely relaxed.
The relaxing of the spring 24 and the pulling of the support member 16 towards the support member 14 will cause the arms 30 and 32 to pivot into the position shown in Figure 5 so that the radius R is effectively flattened out and becomes infinite (ie. the portion 50 effectively forms a straight line) thereby also changing the shape of the fibre in the vicinity of the portion 50 in a known and controlled manner.

Furthermore, because of the pivotal connection of the arms 30 and 32 to the members 14 and 16 by the pivot connections 33 and 34 and the pivoting of the arms 30 and 32 together by the pivot 34, any movement of the wire 12 in the direction of arrows A and B previously described, will tend to be amplified by the orientation of the arms and the leverage of the arms. Thus, only a small movement of the wire 12 will cause a significant change in shape of the portion 50 from the intermediate orientation shown in Figure 1 towards to the maximum bias orientation shown in Figure 4 or between the orientation shown in Figure 1 and the zero bias orientation shown in Figure 5. Thus, only a small movement will cause a significant change in shape which provides the controlled change in shape of the fibre and therefore the easily detectable signal to indicate an alarm condition. This amplification of the movement of the wire 12 upon an intrusion is important because the intrusion may take place at some considerable distance from the location where the devices 10 are actually installed in the fence. Thus, particularly if the wires are pulled apart, the amount of movement of one of the support members 14 and 16 relative the other and the amount of stretching of the spring can be quite slight. The amplification of that movement by the lever arrangement of the arms will ensure a significant change in the curvature of the fibre supported on the arms and therefore an easily detected parameter change of the light propagating through the fibre.

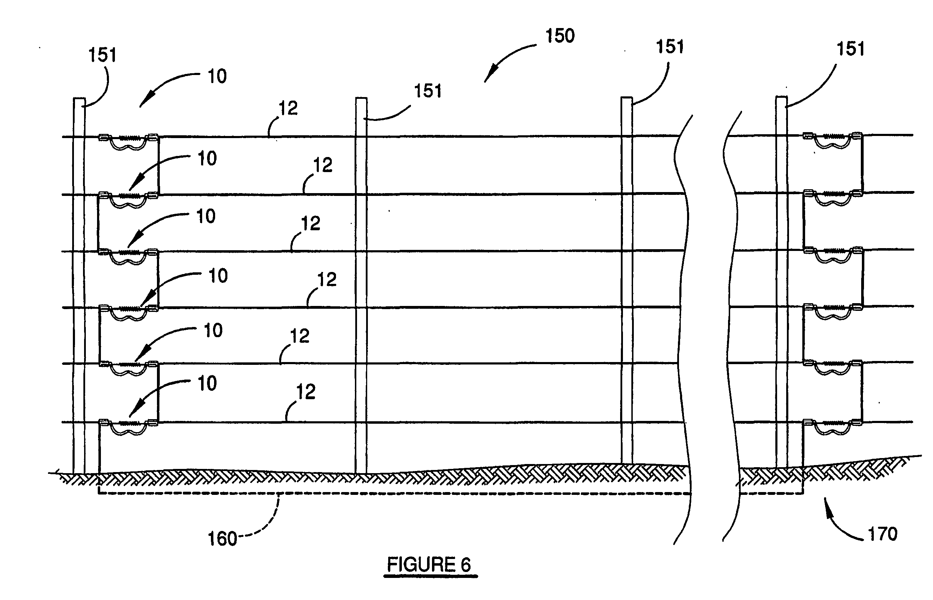

Figure 6 shows an installation of the present invention in a fence 150 which includes vertical posts 151 and the horizontally disposed wires 12. As can be seen in Figure 6, a device 10 can be connected in each of the wires 12 adjacent one of the posts 151 for example and the optical fibre can extend along the arms 30 and 32 of each of the devices and then extend from one wire 12 to the next adjacent wire 12 and then again extend along the arms 30 and 32 of the device 10 connected in that wire 12 and so on, so that all the wires 12 are connected by a common fibre. The fibre can then travel underground as shown by dotted line 160 or along one of the wires 12 to another location where another set of the devices 10 are installed in each of the wires 12 as generally indicated by 170 in Figure 6. The fibre can then extend along the arms of each of those devices 10 in series and then continue to another location where a further set of devices 10 are installed and so on until the entire fence 150 is covered by the fibre. Because the fibre does not have to extend along each of the fibres 12, the amount of optical fibre used in the system is considerably less, thereby greatly reducing the cost of installing the secure perimeter barrier. As described above, because the fibre is supported on the arms 30 and 32 of the devices 10 and the arms 30 and 32 are moved in a controlled manner upon either a severing of the wires 12 or a pulling of adjacent wires 12, the shape of the fibre is changed in a controlled and reproducible manner so that change in the parameter of light travelling through the fibre can be easily detected to cause an alarm condition to be generated.

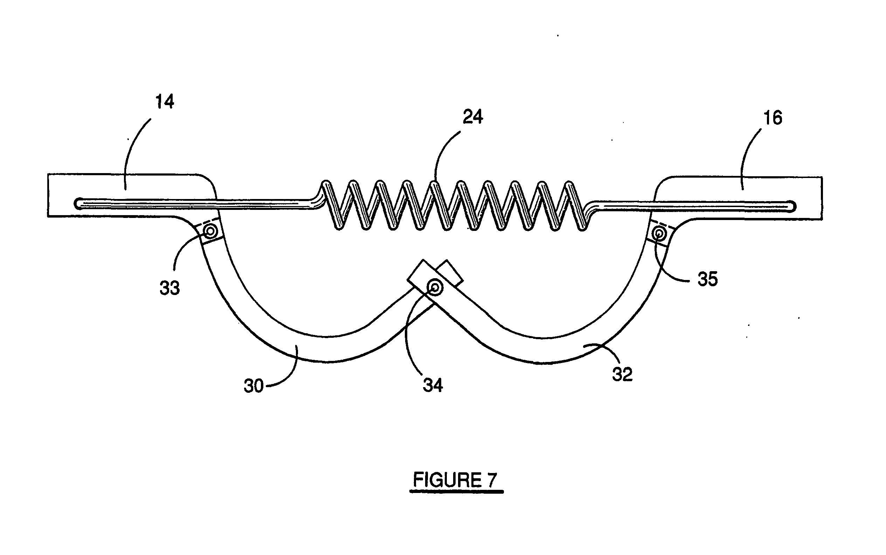

Figure 7 shows a further embodiment of the invention in which the arms 30 and 32 cross over one another at their ends and are joined by pivot 34. Like reference numerals in Figure 7 indicate like parts of those described with reference to Figure 1.

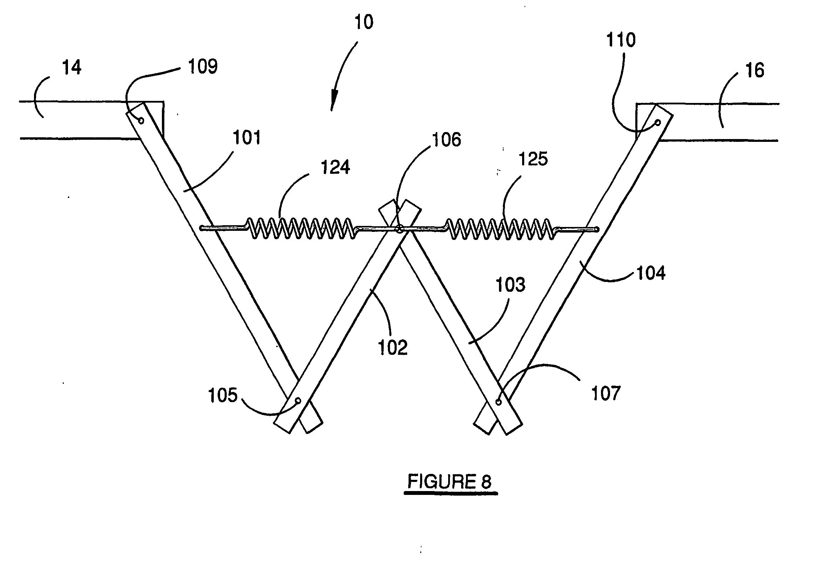

Figure 8 shows a further embodiment of the invention in which the device 10 is in the form of a straight-sided W configuration having a first arm 101, a second arm 102, a third arm 103 and a fourth arm 104. The arms 101 and 102 are joined by a pivot connection 105. The arms 102 and 103 are joined by a pivot connection 106, and the arms 103 and 104 are joined by a pivot connection 107. The arm 101 is pivotally connected to support member 14 by a pivot connection 109 and the arm 104 is connected to the support member 16 by pivot connection 110.

Springs 124 and 125 extend between the arms 101 and 102 and 103 and 104 respectively and provide bias in exactly the same manner as previously described.

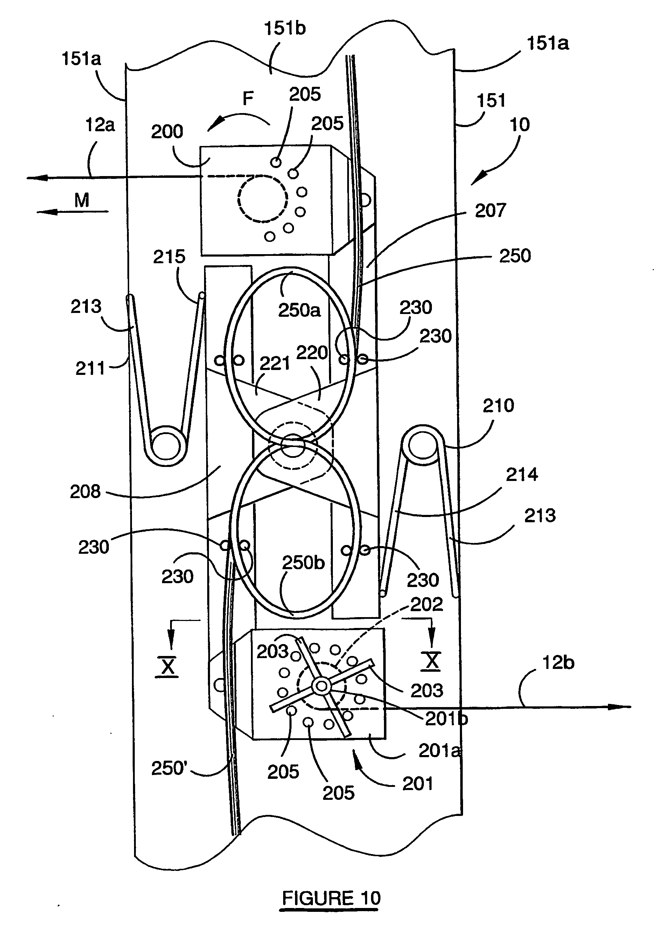

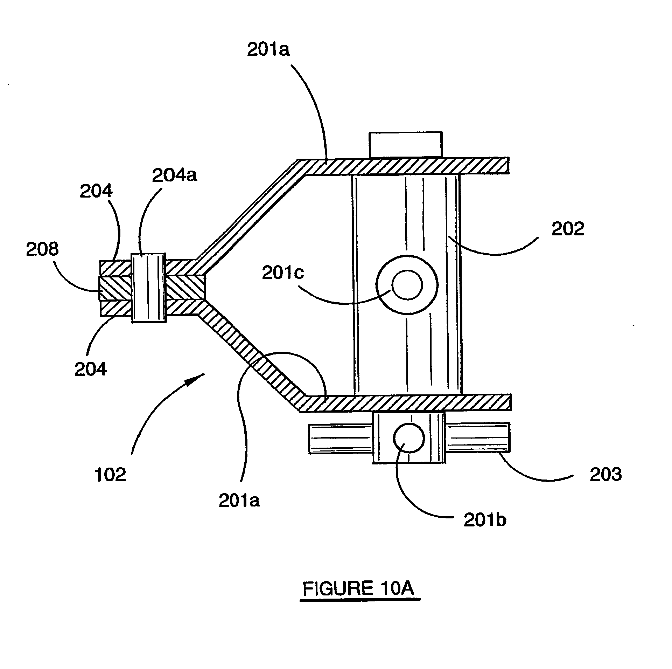

This embodiment has the advantage that the arms are formed from straight sections of metal rather than curved sections of metal. Furthermore, there will be five curved portions of the fibre supported by the arms at the pivot connections 109, 105, 106, 107 and 110, thereby increasing the number of changes in curvature of the fibre should the wire 12 be pulled or severed, notwithstanding the fact that the radius of curvature at each of those locations is likely to be smaller in the intermediate position shown in Figure 10 than in the other embodiments.

In still a further embodiment, rather than locate the springs 124 and 125 as shown in Figure 8, a single spring could be interposed between the arms 102 and 103.

Furtherstill, further multiples of the W configuration shown in Figure 8 could also be used to increase the number of arms and therefore the number of curved sections of the fibre which is supported by the device.

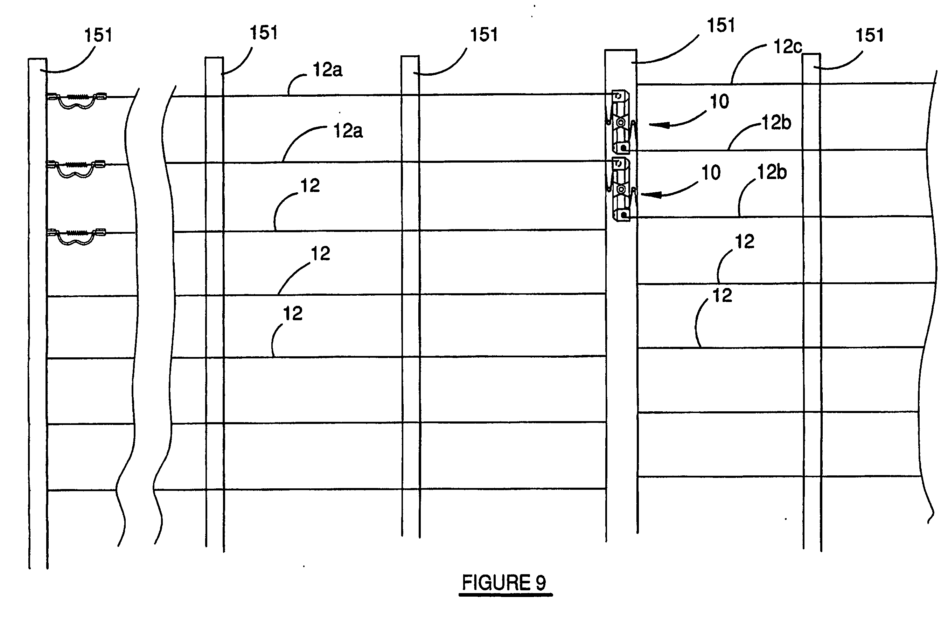

Figures 9 to 12 show a second and preferred embodiment of the invention which has some additional advantages over the embodiment previously described. In particular, the embodiment of Figures 9 to 12 is not susceptible to changes in temperature which may cause an extension or contraction of the wires 12 which form the perimeter barrier. This eliminates the possibility of the sensitivity of the detector (not shown) being adversely effected by fluctuations in temperature which could happen if the arms 30 and 32 described with reference to the previous embodiment should move because of stretching or contraction of the wires 12 in the previous embodiment.

With reference to Figure 9, a perimeter barrier is shown in which like reference numerals indicate like parts to those previously described. As can be seen, the perimeter barriers made up of posts 151 and wires 12. In this embodiment, the support device 10 is contained wholly within some of the posts 151. In this embodiment, each of the devices 10 receives a wire 12a and a wire 12b which are not in alignment with one another, as can be seen from Figure 9. It should be noted that the wire labelled 12c is also connected to the devices 10. The devices 10 are located within the posts and covered by a cover so that it appears that the top wire 12a in Figure 9 and the wire 12c merely appear to be an extension of one another.
Similarly, the second wire 12a and the top wire 12b also appear to be an extension of one another, as are the other generally horizontally aligned wires on either side of the post 151 which includes the devices 10. The fact that each of the devices 10 is connected to a wire 12a and a wire 12b which are not in alignment with one another assists in disguising the operation of the devices 10 and the nature of movement of the wires which will trigger the devices 10 to produce an alarm condition.

One of the devices 10 is shown in Figure 10 and comprises a support member 200 which receives the wire 12 (for example the wire 12a shown in Figure 9). The post 151 is preferably of square cross-section and includes a base portion formed of side walls 151a and bottom wall 151b. A cover (not shown) can cover the open side of the post so as to conceal the devices 10 within the post. A second support member 201 is also provided which is connected to a wire 12 (such as the wire 12b described with reference to Figure 9). The wires 12 can pass into the post through holes (not shown) in the side walls 151a so as to join with the support members 200 and 201.
The support members 200 and 201 are identical except for the fact that they extend in opposite directions (ie. if placed together would be a mirror image of one another) and therefore only the support member 201 will be described. The support member 201 carries a capstan wheel 202 to which the wire 12b is engaged. As shown in Figure 10A, the support member 201 is bifurcated and formed of a pair of plates 201a which journal an axel 201b on which the capstan wheel 202 is mounted for rotation with the axel 201b. The capstan 202 (and the axel 201b) have a hole 201c which can be used to engage the end of a wire 12 so that the wire can easily be wound onto the capstan wheel 202. The axel 201b has a crank or winding handles 203 connected to it so as to enable the axel 201b and capstan 202 to be rotated to wind the wire 12 onto the capstan 202 to tension the wire 12.

The capstan 202 can be rotated by engaging the handles 203 by a suitable tool (not shown). When the wire 12b has been fully tensioned, a pin (not shown) is located through one of the holes 205 in the supported member 201 so as to provide an abutment for the handle 203 and prevent the capstan wheel 202 from rotating in the reverse direction due to the tension applied by the wire 12. Thus, the capstan 202 is held in place by the pin located in one of the holes 205 and the wire 12b in a tensioned condition.

The support member 200 is connected to an arm 207 and the support member 201 is connected to an arm 208. The arms 207 and 208 are connected to the support members 200 and 201 in the same manner and, as shown in Figure 10A, the arm 208 is sandwiched between end parts 204 of the members 201a and coupled to those parts by a pin 204a.

In the intermediate position shown in Figure 10, the arms 207 and 208 are generally parallel with respect to one another. A first spring 210 provides bias to the arm 207 and a second spring 211 provides bias to the arm 208. The springs 210 and 211 are fixed onto bottom wall 151b of the post 151 and have an arm 213 which engages the respective side wall 151a and an arm 214 and an arm 215 respectively which abut the arms 207 and 208 to thereby bias the arms 207 and 208 into the position shown in Figure 10 against the tension applied to the support members 200 and 201, and therefore the arms 207 and 208, by the wires 12a and 12b.

Each of the arms 207 and 208 include a coupling flange 220 and 221 respectively for coupling the arms 207 and 208 for movement with respect to one another. In the embodiments shown in Figure 10, the flanges 221 and 220 overlap one another and a single pivot pin 225 passes through both flanges 221 and 220 and couples to bottom wall 151b of the post 151. Both of the arms 207 and 208 are therefore able to pivot on the pivot pin 225.

The arms 207 and 208 have connectors 230 which may be in the form of lugs, pins or the like for receiving an optical fibre 250 and holding the fibre 250 onto the arms 207 and 208. In the embodiments shown, the fibre 250 enters from the top and then is formed into a figure-8 configuration and leaves the device at the bottom, as marked by reference numeral 250'.

If an attempt is made to breach the barrier by, for example, pulling apart the wire 12a shown in Figure 10 and the wire below that wire (which is not shown in Figure 10), the pulling apart of the wires will cause the wire 12a to be pulled in the direction of arrow M in Figure 10. This in turn will cause the support member 200 and the arm 207 to pivot in the direction of arrow F about the pivot pin 225, thereby pulling the arm 207 into an inclined position with respect to the arm 208. The effect of this will be to cause the portion of the fibre marked 250a in Figure 10 to form a much smaller radius of curvature in a controlled manner to thereby generate the alarm signal in the manner described with reference to the previous embodiment. Similarly, the portion of the fibre marked 250b is caused to take up a curved configuration having a much larger radius of curvature because of the pivoting of the arm 207, thereby also causing the change in the configuration of the portion 250b in a controlled and reproducible manner so that the change in the parameter of light travelling through the fibre can be easily detected to cause an alarm condition to be generated.

When the wire 12a is pulled in the direction of arrow M, the pivoting of the arm 207 is against the bias of the arm 214 of the spring 210. Obviously, when the wire 12a is returned to its normal position, the spring 210 will bias the arm 207 back to the position shown in Figure 10.

Similarly, should the wire 12b be moved in the same fashion, the arm 208 will move in the same way against the bias of the spring 215 and then be returned when the wire 12b returns to its normal position.

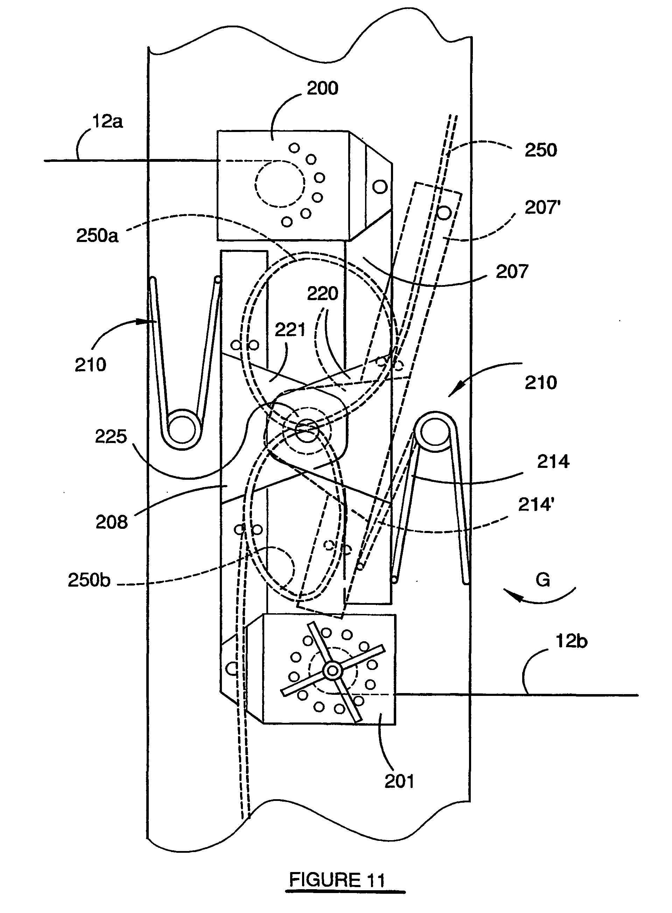

Figure 11 shows a view of the arm 207 in dotted lines being moved to an extreme position should the wire 12a be cut so that the tension supplied by the wire 12a is released. If this occurs, the arm 214 of the spring 210 biases the arm 207 in the direction of arrow G in Figure 11 into the position shown in dotted lines, because the tension supplied by the wire 12a holding the spring 210 in a "compressed" condition has been released, thereby allowing the spring 210 to push the arm 207 into the position shown by dotted lines and marked with the prime reference numerals in Figure 11. The fibre 250 shown in dotted lines in Figure 11 and the change in shape or radius of curvature of the portions 250a and 250b is clearly evident in the situation where the wire 12a is severed, as illustrated by the position in dotted lines in Figure 11.

Similarly, if the wire 12b is severed, the arm 208 will be biased into an inclined position with respect to the arm 207 by the spring 210 to cause a similar effect to that described above.

Thus, movement of the wires 12a or 12b to separate the wires to enable a person to breach the barrier or severing of the wires will cause the arms 207 and 208 to move relative to one another to thereby cause the change in the configuration of the fibre 250 as supported on the arms 207 and 208 to enable the alarm condition to be generated. Since the adjacent wires 12a and 12b to which the support members 200 and 201 are connected are not in alignment with one another or the same wire, any separation of two adjacent wires to enable a person to breach the fence on either side of the device 200 will cause some relative movement between the arms 207 and 208 to thereby enable the alarm condition to be generated.

Furthermore, because of the manner in which the wires 12 are connected to each of the devices 10, any attempt to breach the perimeter will cause at least two of the devices 10 to be triggered to provide an alarm condition. For example, if an attempt is made to pull apart the top two wires 12a in Figure 9, then the two devices 10 drawn in Figure 9 will be triggered. If one of the wires 12a is cut, then one of the devices 10 shown in Figure 9 will be triggered, as will be another of devices (not shown) at the other end of the cut wire 12a.

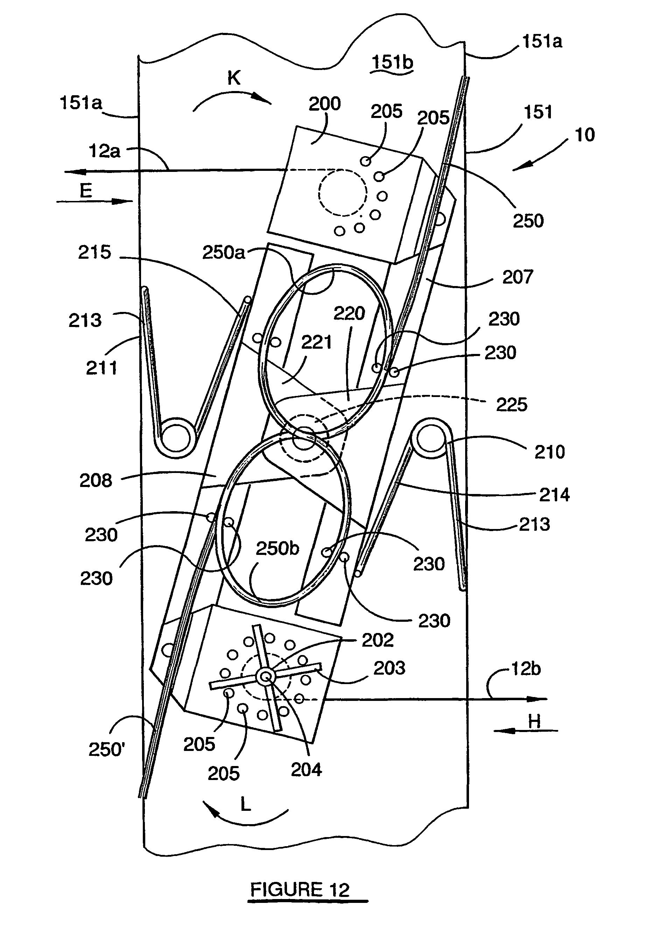

The arrangement shown in Figures 9 to 12 has the advantage that stretching or contraction of the wires 12 due to fluctuations in temperature will not cause an alarm condition to be generated. The reason for this will be described by reference to Figure 12.

Should the wires expand due to a an increase in temperature so that the wire 12a is effectively pulled in the direction of arrow E and the wire 12b pulled in the direction of arrow H shown in Figure 12, the amount of expansion of the wires 12a and 12b will be the same because the wires are made from the same material and are approximately the same length, etc. The expansion of the wire 12a will therefore allow spring 211 to rotate the support member 200 and an arm 207 in the direction of arrow K around pivot pin 225 a certain amount and spring 210 will rotate the arm 208 and support member 201 about the pivot pin in the direction of arrow L in Figure 12 by the same amount. This movement will simply rotate the entire assembly around the pivot pin 225 as is shown in Figure 12. Thus, there is no relative movement between the arms 207 and 208 and therefore the configuration of the fibre 250 as supported by the arms 207 and 208 does not change. Thus, no alarm signal is generated.
Similarly, if the wires contract due to a drop in temperature, the assembly shown in Figure 12 will simply rotate as a unit about pivot pin 225 in the opposite direction and therefore the configuration of the fibre 250 will also not change. Thus, once again, no alarm signal will be generated. The rotation in the opposite direction in the case of contraction of the wires 12 is caused by the wires 12 pulling the support members 200 and 201 in a direction opposite arrow E and H in Figure 12 and therefore rotating the arms 207 and 208 about the pivot pin 225 against the bias of the springs 210 and 211.

The embodiment of Figures 9 to 12 therefore has the advantage of generating alarm signals when an attempt is made to breach the barrier, but not being subject to the generation of alarm signals in the case that the wires 12 which form the barrier expand or contract due to changes in temperature.

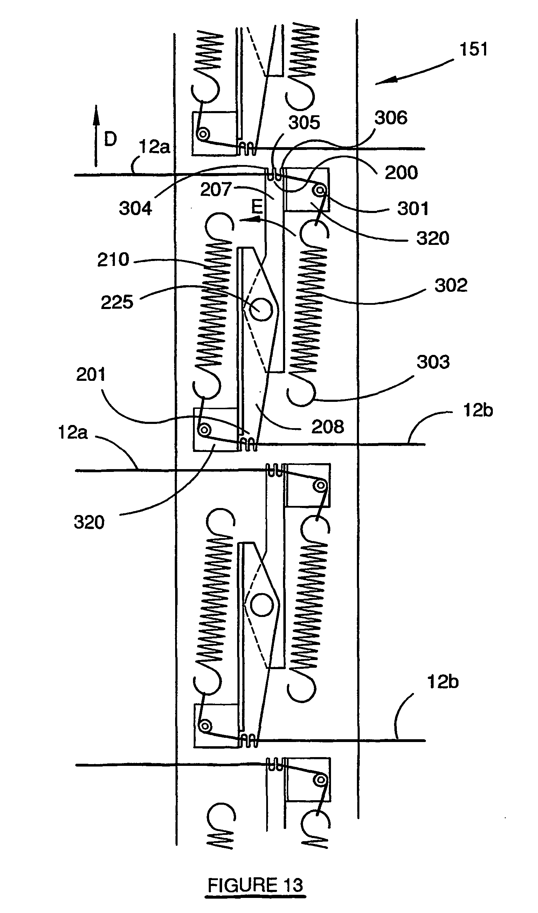

Figure 13 is a view of a still further embodiment of the invention which operates in the same manner as Figures 9 to 12.

As shown in Figure 13, in this embodiment like reference numerals indicate like parts to those described with reference to Figures 9 to 12. Also, for ease of illustration, the fibre 250 is not shown.

In this embodiment, the support members 200 and 201 are formed by integral ends of the arms 207 and 208 which are provided with prongs 304, 305 and 306. As is shown, the wires 12a and 12b extend under the prongs 304 and 306 and over the prong 305 so as to connect the wires 12a and 12b to the respective connection portions 200 and 201, and therefore to the respective arms 207 and 208. The wire 12a can be connected to the prongs 304, 305 and 306 after the wire 12a is located in position, as described above, by crimping the prongs 304, 305 and 306 so that they securely attach to the wire 12a. The prongs of the member 201 are connected to the wire 12b in the same manner. The wire 12a continues passed the prongs and extends about a guide pulley 301 which is connected to a fixed bracket 320 which is fixed in post 151. The free end of the wire 12a is connected to one end of spring 302. The other end 303 of the spring 302 is fixed to the post 151. The wire 12b connects to spring 310 in exactly the same manner.

If an attempt is made to pull two adjacent wires apart, such as shown by arrow D in Figure 13, the arm 207 will be pulled in the direction of arrow E relative to the arm 208 which will cause the fibre fixed to the arms 207 and 208 to move so that the alarm is generated. If the wire 12a is cut, the tension in the spring 302 will pull on the end of the wire 12a, causing the arm 207 to pivot in a direction opposite arrow E which, again, will change the configuration of the fibre supported on the arms 207 and 208 to cause the alarm to be generated.

However, as in the previous embodiment, if the wires 12a and 12b expand or contract due to changes in temperature, the arms 207 and 208 pivot on the pivot 225 in the same direction without the arms 207 and 208 moving relative to one another. Thus, the fibre fixed to the arms 207 and 208 is not disturbed, and therefore no alarm is generated.

Although, in the embodiment of Figure 13, springs which are stretched or in tension are used, the springs could be compression strings which are compressed to locate the arms 207 and 208 into a predetermined orientation with respect to one another.

Also, other forms of attachments of wires 12a to the arms 207 and 208 are possible.

The detection and light propagation techniques for propagating light through the fibre 100 and for detecting a change in parameter may be according to our co-pending International Patent Application No. PCT/AU99/01028.

## Claims

1. A device for supporting an optical fibre in a perimeter barrier (12), comprising:
a first support member (30, 200, 207) for connection to a portion (12a) of the perimeter barrier;
a second support member (32, 201, 208) for connection to another portion (12b) of the perimeter barrier **characterised by**:
a first fibre support (16, 304, 305) coupled to the first member (30, 200, 207);
a second fibre support (16, 304, 305) coupled to the second member (32, 201, 208);
coupling means (34, 205) for coupling the first fibre support and the second fibre support for relative movement with respect to one another; and
biasing means (24, 210, 211, 302) for biasing the first and second fibre supports into an intermediate orientation between a maximum biased orientation provided by a maximum bias of the biasing means and a zero bias orientation if no bias is provided by the biasing means.

2. The device of claim 1 wherein the fibre supports comprise support arms (30, 32, 200, 201, 207, 208).

3. The device of claim 1 wherein the coupling means is a pivot means (34, 225).

4. The device of claim 2 wherein the biasing means comprises a spring (24) which has one end connected to the first member (30, 32) and the other end connected to the second member.

5. The device of claim 2 wherein the arms (30, 32) are curved arms, each arm having a first end pivotally connected to a respective one of the first and second support members (14, 16), and a second end pivotally coupled together by the pivot means (33, 35).

6. The device of claim 1 wherein the device includes attachment means (101) for attaching the optical fibre (100) to the device so that the optical fibre is supported on the device and extends along the arms of the device.

7. The device of claim 1 wherein the first (14, 304, 305) and second portions (16) include connection portions (18, 20, 304, 305) for connection to the portions of the perimeter barrier.

8. The device of claim 5 wherein the connection portions comprise holes (18) to which the portions of the perimeter barrier are connected or tabs (20) which are folded over to engage the portions of the perimeter to join the portions of the perimeter barrier to the first and second members.

9. The device of claim 6 wherein the attachment means comprise support lugs (29, 230) on the device.

10. The device of claim 9 wherein the attachment means further includes ties (101) for securing the fibres so the fibres extend along the arms.

11. The device of claim 2 wherein the arms have a transverse cross section which is at least part curved (40) in shape so that the fibre can locate in the curved profile of the arms.

12. The device of claim 1 wherein the device has third (102) and fourth (103) fibre supports which form a straight-sided W configuration with three pivot connections (103, 106, 107) formed between adjacent arms of the W configuration.

13. The device of claim 1 wherein the first fibre support and second fibre support are coupled for relative movement on pivot means (225) so that should the perimeter barrier expand or contract due to changes in temperature, the first and second fibre supports (200, 207, 208) move in a substantially fixed manner with respect to one another so that there is substantially no change in the configuration of an optical fibre to be supported on the first and second fibre supports.

14. The device of claim 13 wherein the first and second fibre supports comprise arms (207, 208) which are arranged with respect to one another in a predetermined orientation, each arm having a coupling means which includes pivot means (225) so that upon an attempt to breach the perimeter barrier, movement of the perimeter barrier (12) will cause relative movement of the first and second fibre supports (207, 208) with respect to one another, but on a change of temperature, expansion or contraction of the perimeter barrier (12) causes fixed but no relative movement of the first fibre support (207) with respect to the second fibre support (208) so that an alarm signal is not generated due to movement of the perimeter barrier caused by expansion or contraction of the perimeter barrier due to temperature change.

15. The device of claim 14 wherein the coupling means include coupling flanges (208) and the pivot means comprises a single pivot pin (225) passing through both of the coupling flanges.

## Patentansprüche

1. Vorrichtung zum Halten einer Lichtleitfaser in einer Begrenzungsbarriere (12), die umfasst:
ein erstes Halteelement (30, 200, 207) für die Verbindung mit einem Abschnitt (12a) der Begrenzungsbarriere;
ein zweites Halteelement (32, 201, 208) für die Verbindung mit einem weiteren Abschnitt (12b) der Begrenzungsbarriere, **gekennzeichnet durch**:
einen ersten Faserhalter (16, 304, 305), der mit dem ersten Element (30, 200, 207) gekoppelt ist;
einen zweiten Faserhalter (16, 304, 305), der mit dem zweiten Element (32, 201, 208) gekoppelt ist;
Kopptungsmittel (34, 205), um den ersten Faserhalter und den zweiten Fesethalter für eine Bewegung relativ zueinander zu koppeln; und
Vorbelastungsmittel (24, 210, 211, 302), um den ersten und den zweiten Faserhalter in eine Zwischenorientierung zwischen einer maximal vorbelasteten Orientierung, die **durch** eine maximale Vorbelastung der Vorbelastungsmittel geschaffen wird, und einer vorbelastungsfreien Orientierung, falls **durch** die Vorbelastungsmittel keine Vorbelastung geschaffen wird, vorzubelasten.

2. Vorrichtung nach Anspruch 1, bei der die Faserhalter Haltearme (30, 32, 200, 201, 207, 208) umfassen.

3. Vorrichtung nach Anspruch 1, bei der die Kopplungsmittel Schwenkmittel (34, 225) sind.

4. Vorrichtung nach Anspruch 2, bei der die Vorbelastungsmittel eine Feder (24) umfassen, wovon ein Ende mit dem ersten Element (30, 32) verbunden ist und das andere Ende mit dem zweiten Element verbunden ist.

5. Vorrichtung nach Anspruch 2, bei der die Arme (30, 32) gekrümmte Arme sind, wobei jeder Arm mit einem ersten Ende an einem der ersten und zweiten Halteelemente (14, 16) angelenkt ist und mit einem zweiten Ende über die Schwenkmittel (33, 35) aneinander angelenkt sind.

6. Vorrichtung nach Anspruch 1, wobei die Vorrichtung Befestigungsmittel (101) umfasst, um die Lichtleitfaser (100) an der Vorrichtung zu befestigen, so dass die Uchtleitfaser an der Vorrichtung gehalten wird und sich längs der Arme der Vorrichtung erstreckt.

7. Vorrichtung nach Anspruch 1, bei der der erste Abschnitt (14, 304, 305) und der zweite Abschnitt (16) Verbindungsabschnitte (18, 20, 304, 305) aufweisen, um sie mit den Abschnitten der Begrenzungsbarriere zu verbinden.

8. Vorrichtung nach Anspruch 5, bei der die Verbindungsabschnitte Löcher (18) aufweisen, mit denen die Abschnitte der Begrenzungsbarriere verbunden sind, oder Ansätze (20) aufweisen, die übereinander gefaltet sind, um mit den Abschnitten der Begrenzung in Eingriff zu gelangen, um die Abschnitte der Begrenzungsbarriere mit dem ersten und dem zweiten Element zu verbinden.

9. Vorrichtung nach Anspruch 6, bei der die Befestigungsmittel Halteösen (29, 230) an der Vorrichtung umfassen.

10. Vorrichtung nach Anspruch 9, bei der die Befestigungsmittel ferner Bänder (101) umfassen, um die Fasern in der Weise zu befestigen, dass sie sich längs der Arme erstrecken.

11. Vorrichtung nach Anspruch 2, bei der die Arme einen transversalen Querschnitt haben, dessen Form wenigstens zum Teil gekrümmt ist (40), so dass die Faser in dem gekrümmten Profil der Arme angeordnet werden kann.

12. Vorrichtung nach Anspruch 1, wobei die Vorrichtung einen dritten (102) und einen vierten (103) Faserhalter besitzt, die eine gerade W-Konfiguration mit drei Schwenkverbindungen (103,106,107), die zwischen benachbarten Armen der W-Konfiguration ausgebildet sind, bilden.

13. Vorrichtung nach Anspruch 1, bei der der erste Faserhalter und der zweite Faserhalter für eine relative Bewegung mit Schwenkmitteln (225) gekoppelt sind, so dass sich der erste und der zweite Faserhalter (200, 207, 208) dann, wenn sich die Begrenzungsbarriere aufgrund von Temperaturänderungen ausdehnen oder zusammenziehen sollte, auf im Wesentlichen feste Weise in Bezug zueinander bewegen, so dass in der Konfiguration einer an dem ersten und an dem zweiten Faserhalter zu haltenden Lichtleitfaser im Wesentlichen keine Änderung auftritt.

14. Vorrichtung nach Anspruch 13, bei der der erste und der zweite Fasefielter Arme (207, 208) umfassen, die relativ zueinander in einer vorgegebenen Orientierung angeordnet sind, wobei jeder Arm ein Kopplungsmittel aufweist, das Schwenkmittel (225) enthält, so dass bei einem Versuch, die Begrenzungsbarriere zu durchbrechen, eine Bewegung der Begrenzungsbarriere (12) eine relative Bewegung des ersten und des zweiten Faserhalters (207, 208) hervorruft, jedoch bei einer Temperaturänderung die Ausdehnung oder Kontraktion der Begrenzungsbarriere (12) zwar eine gemeinsame, aber keine relative Bewegung des ersten Faserhalters (207) in Bezug auf den zweiten Faserhalter (208) hervorruft, so dass aufgrund einer Bewegung der Begrenzungsbarriere, die durch eine Ausdehnung oder Kontraktion der Begrenzungsbarriere aufgrund einer Temperaturänderung hervorgerufen wird, kein Alarmsignal erzeugt wird.

15. Vorrichtung nach Anspruch 14, bei der die Kopplungsmittel Kopplungsflansche (208) umfassen und die Schwenkmittel einen einzigen Schwenkzapfen (225), der durch beide Kopplungsflansche verläuft, umfassen.

## Revendications

1. Dispositif pour supporter une fibre optique dans une barrière périmétrique (12), comprenant :
un premier élément de support (30, 200, 207) pour une connexion à une portion (12a) de la barrière périmétrique ;
un second élément de support (32, 201, 208) pour une connexion à une autre portion (12b) de la barrière périmétrique, **caractérisée par** :
un premier support de fibre (16, 304, 305) couplé au premier élément (30, 200, 207) ;
un second support de fibre (16, 304, 305) couplé au second élément (32, 201, 208) ;
des moyens de couplage (34, 205) pour coupler le premier support de fibre et le second support de fibre dans un mouvement relatif l'un par rapport à l'autre ; et
des moyens d'inclinaison (24, 210, 211, 302) pour incliner les premier et second supports de fibre dans une orientation intermédiaire entre une orientation d'inclinaison maximale fournie par une inclinaison maximale des moyens d'inclinaison et une orientation à inclinaison nulle si aucune inclinaison n'est fournie par les moyens d'inclinaison.

2. Dispositif selon la revendication 1 dans lequel les supports de fibre comprennent des bras de support (30, 32, 200, 201, 207, 208).

3. Dispositif selon la revendication 1 dans lequel les moyens de couplage sont des moyens de pivot (34, 225).

4. Dispositif selon la revendication 2 dans lequel les moyens d'orientation comprennent un ressort (24) qui a une extrémité connectée au premier élément (30, 32) et l'autre extrémité connectée au second élément.

5. Dispositif selon la revendication 2 dans lequel les bras (30, 32) sont des bras incurvés, chaque bras ayant une première extrémité connectée de façon pivotante à un élément respectif du premier et du second élément de support (14, 16), et une seconde extrémité couplée de façon pivotante ensemble par les moyens de pivotement (33, 35).

6. Dispositif selon la revendication 1 dans lequel le dispositif inclut des moyens de fixation (101) pour fixer la fibre optique (100) au dispositif de façon à ce que la fibre optique soit supportée sur le dispositif et s'étende le long des bras du dispositif.

7. Dispositif selon la revendication 1 dans lequel les première (14, 304, 305) et seconde portions (16) incluent des portions de connexion (18, 20, 304, 305) pour être connectées aux portions de la barrière périmétrique.

8. Dispositif selon la revendication 5 dans lequel les portions de connexion comprennent des trous (18) auxquels les portions de la barrière périmétrique sont connectées ou des languettes (20) qui sont repliées pour engager Jes portions du périmétrique pour joindre les portions de la barrière périmétrique aux premier et second éléments.

9. Dispositif selon la revendication 6 dans lequel les moyens de fixation comprennent des languettes de support (29, 230) sur le dispositif.

10. Dispositif selon la revendication 9 dans lequel les moyens de fixation comprennent en outre des liens (101) pour fixer les fibres de façon à ce que les fibres s'étendent le long des bras.

11. Dispositif selon la revendication 2 dans lequel les bras ont une section transversale qui est au moins partiellement de forme incurvée (40) de façon à ce que la fibre puisse se loger dans le profil incurvé des bras.

12. Dispositif selon la revendication 1 dans lequel le dispositif a des troisième (102) et quatrième (103) supports de fibre qui forment un configuration en W à côtés droits avec trois connexions de pivot (103, 106, 107) formées entre les bras adjacents de la configuration en W.

13. Dispositif selon la revendication 1 dans lequel le premier support de fibre et le second support de fibre sont couplés pour être en mouvement relatif sur des moyens de pivot (225) de sorte que si la barrière périmétrique se dilate ou se contracte du fait de changements de température, les premier et second supports de fibre (200, 207, 208) se déplacent de façon essentiellement fixe l'un par rapport à l'autre de sorte qu'il n'y ait pour l'essentiel pas de changement dans la configuration d'une fibre optique pour qu'elle soit supportée sur le premier et le second support de fibre.

14. Dispositif selon la revendication 13 dans lequel le premier et le second supports de fibre comprennent des bras (207, 208) qui sont disposés l'un par rapport à l'autre dans une orientation prédéterminée, chaque bras ayant des moyens de couplage qui incluent des moyens de pivot (225) de façon à ce que lors d'une tentative de pénétration de la barrière périmétrique, le mouvement de la barrière périmétrique (12) entraîne un mouvement relatif du premier et du second support de fibre (207, 208) l'un par rapport à l'autre, mais que lors d'un changement de température, la dilatation ou la contraction de la barrière de contour (12) entraîne un mouvement fixe mais non relatif du premier support de fibre (207) par rapport au second support de fibre (208) de sorte qu'un signal d'alarme n'est pas généré du fait du mouvement de la barrière périmétrique provoquée par la dilatation ou la contraction de la barrière périmétrique due au changement de température.

15. Dispositif selon la revendication 14, dans lequel les moyens de couplage incluent des flasques de couplage (208) et les moyens de pivot comprennent une goupille de pivot simple (225) passant au travers des deux flasques de couplage.
